Europäisches Patentamt

European Patent Office

Office européen des brevets

(19)

(11) **EP 1 298 469 A2**

(12) ## DEMANDE DE BREVET EUROPEEN

(43) Date de publication:
**02.04.2003 Bulletin 2003/14**

(51) Int Cl.⁷: **G02B 6/34**

(21) Numéro de dépôt: **02292367.6**

(22) Date de dépôt: **26.09.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **27.09.2001 FR 0112449**

(71) Demandeur: **ALCATEL
75008 Paris (FR)**

(72) Inventeurs:
• **Andrieu, Xavier
91220 Bretigny sur Orge (FR)**

• **Cottevieille, Denis
93100 Montreuil sous Bois (FR)**
• **Riant, Isabelle
91400 Orsay (FR)**

(74) Mandataire: **Korakis-Ménager, Sophie
Compagnie Financière Alcatel
Département de Propriété Industrielle,
5, rue Noel Pons
92734 Nanterre Cedex (FR)**

(54) **Filtre accordable composé d'une fibre optique avec un réseau de Bragg**

(57) L'invention concerne un filtre accordable composé d'une fibre optique comportant un réseau de Bragg sur une portion. Cette portion de fibre est revêtue d'un matériau maintenu dans un espace confiné, ce matériau étant apte à exercer des pressions sur le réseau de manière à comprimer radialement et à étirer longitudinalement la portion de la fibre.

FIG_2

EP 1 298 469 A2

## Description

L'invention concerne un filtre accordable en longueur d'onde ainsi que le procédé d'utilisation correspondant.

Le domaine de l'invention est celui des systèmes de télécommunications optiques et plus spécifiquement celui des filtres accordables que l'on utilise notamment dans les systèmes de multiplexage ou de démultiplexage en longueur d'onde.

Les filtres accordables peuvent être constitués par des réseaux de Bragg photo-inscrits sur des portions de guides d'onde tels que des fibres optiques ou des guides d'ondes planaires. Un tel filtre constitue un composant intégré à un guide optique et permet de réduire considérablement les pertes d'insertion ou de dépendance à la polarisation.

Une fibre optique est classiquement composée d'un coeur optique, ayant pour fonction de transmettre et éventuellement d'amplifier un signal optique, entouré d'une gaine optique, ayant pour fonction de confiner le signal optique dans le coeur. A cet effet, les indices de réfraction du coeur $n_{coeur}$ et de la gaine $n_{gaine}$ sont tels que $n_{coeur} > n_{gaine}$. Ainsi, le coeur et la gaine forment un guide d'onde. La gaine est elle-même entourée d'un milieu extérieur d'indice de réfraction $n_{ext} >$ ou $< n_{gaine}$. L'ensemble coeur-gaine associé au milieu extérieur forme à nouveau un guide d'onde.

Le coeur et/ou la gaine de la fibre peuvent être dopés de manière à être rendus photosensibles pour une inscription de réseau de Bragg, par exemple avec du germanium (Ge).

Classiquement, un réseau de Bragg est constitué par une variation locale périodique de l'indice de réfraction du guide. Le pas du réseau, c'est à dire la distance entre deux variations d'indice dans le guide, peut être constant, variable ou multiple. Dans le cas d'un réseau à pas constant $\Lambda$, la variation périodique de l'indice de réfraction distribué le long de l'axe de transmission optique dans une portion du guide crée un miroir réfléchissant pour une longueur d'onde donnée (longueur d'onde filtrée), dite longueur de Bragg, selon la relation :

$$\lambda_B = 2.\Lambda.n_{eff}. \qquad [1]$$

Avec $n_{eff}$, l'indice effectif du mode fondamental dans le coeur du guide.

Parmi les techniques permettant de faire varier le pas du réseau, et donc la longueur d'onde filtrée, l'une consiste à étirer la fibre.

L'étirement peut être mécanique et consiste par exemple à tirer chaque extrémité de la fibre. Un tel étirement est complexe à réaliser et à contrôler.

Le but de la présente invention est de proposer un filtre accordable, composé d'une fibre optique comportant un réseau de Bragg, et pouvant facilement être étirée.

L'invention a pour objet un filtre accordable composé d'une fibre optique comportant un réseau de Bragg sur une portion de ladite fibre, principalement caractérisé en ce que ladite portion est revêtue d'un matériau maintenu dans un espace confiné, ledit matériau étant apte à exercer des pressions sur ledit réseau de Bragg de manière à comprimer radialement et à étirer longitudinalement ladite portion de fibre.

Un tel filtre permet ainsi d'étirer la fibre en transformant une variation de pression sur la fibre en une extension longitudinale de celle-ci au moyen d'un matériau élastique pouvant se déformer.

Selon un premier mode de réalisation de l'invention, lesdites pressions sont induites par chauffage du matériau qui se dilate dans ledit espace confiné.

Ledit espace confiné peut être délimité par un tube capillaire ou des spires peu dilatables sous l'effet de la chaleur.

Selon un deuxième mode de réalisation de l'invention, lesdites pressions sont induites par des forces mécaniques radiales externes appliquées sur la surface du matériau maintenu dans ledit espace confiné.

Ledit espace confiné peut être délimité par un réservoir entourant ladite portion de fibre et rempli d'un élément non compressible apte à induire lesdites forces radiales sous l'effet d'une pression exercée sur ledit élément non compressible.

Ledit élément incompressible peut être un fluide non compressible ou un matériau thermiquement extensible.

Le matériau exerçant les pressions sur la portion de fibre à réseau de Bragg peut être un polymère de type élastomère réticulé, par exemple de type silicone.

Selon un troisième mode de réalisation, lesdites pressions sont induites par oxydo-réduction du matériau qui se dilate dans ledit espace confiné.

Selon une caractéristique de ce troisième mode de réalisation, le matériau est un matériau électrochimique choisi dans le groupe comprenant les polymères conducteurs, les composés d'insertion inorganiques, les composés graphites d'intercalation, les composés de type Fullerène.

Selon une mise en oeuvre de ce troisième mode de réalisation, le matériau est disposé entre une première électrode et une deuxième électrode et est associé à un électrolyte, tel qu'un matériau conducteur ionique de type gel.

L'invention concerne également un procédé d'étirement d'une fibre optique composée d'un réseau de Bragg sur une portion de ladite fibre, caractérisé en ce qu'il consiste à exercer des pressions sur ledit réseau au moyen d'un matériau maintenu dans un espace confiné autour de ladite portion de fibre, de manière à comprimer radialement et à étirer longitudinalement ladite portion de fibre.

Selon un mode de réalisation, lesdites pressions sont exercées par dilatation dudit matériau.

Selon les modes de mise en oeuvre, la dilatation dudit matériau est induite par chauffage ou par un cycle d'oxydo-réduction.

Selon un autre mode de réalisation de l'invention, lesdites pressions sont exercées par des forces mécaniques radiales appliquées sur la surface dudit matériau polymère.

D'autres particularités et avantages de l'invention apparaîtront clairement à la lecture de la description faite à titre d'exemple non limitatif et en regard des dessins annexés sur lesquels :

- les figures 1a et 1b représentent schématiquement un filtre optique selon deux modes de mise en oeuvre d'un premier mode de réalisation de l'invention pour lequel le matériau polymère est inséré dans un tube capillaire (fig1a) ou entouré de spires formant guipage (fig 1b) ;
- la figure 2 représente schématiquement un filtre optique un selon deuxième mode de réalisation de l'invention pour lequel le matériau polymère est enfermé dans un réservoir ;
- la figure 3 représente schématiquement un filtre optique un troisième mode de réalisation de l'invention pour lequel le matériau polymère subit un cycle d'oxydo-réduction.

Comme représenté sur l'ensemble des figures, le filtre accordable selon l'invention est constitué d'un réseau de Bragg photo-inscrit sur une portion de fibre optique 1, ladite portion de fibre 1 étant revêtue d'un matériau 2 maintenu dans un espace confiné par un tube 3, un guipage 4, un réservoir 5 ou autre.

Le matériau 2 est apte à exercer des pressions sur la portion de fibre 1. Le matériau 2 va être étiré dans la dimension de l'axe de la fibre et va entraîner ladite portion de la fibre avec lui et donc l'étirer. Pour que la portion de fibre 1 s'étire avec le matériau 2, il ne faut pas que celui-ci se décolle de la fibre pendant l'étirement et glisse sur la fibre sans l'entraîner, c'est pourquoi le matériau est confiné dans un espace entourant la fibre de manière à être maintenu plaqué sur la fibre pendant l'étirement du matériau.

Ce phénomène d'étirement est bien sûr réversible pour que la fibre retrouve sa dimension et plus généralement ses caractéristiques initiales. Il se peut cependant que le filtre ne retrouve pas intégralement ses caractéristiques initiales. Mais comme le filtre accordable est bien sûr intégré dans un dispositif électronique comportant notamment un système d'asservissement électronique, ce dernier permet de compenser les dérives éventuelles.

Pour simplifier on désignera dorénavant la portion de la fibre comportant un réseau de Bragg par le terme fibre.

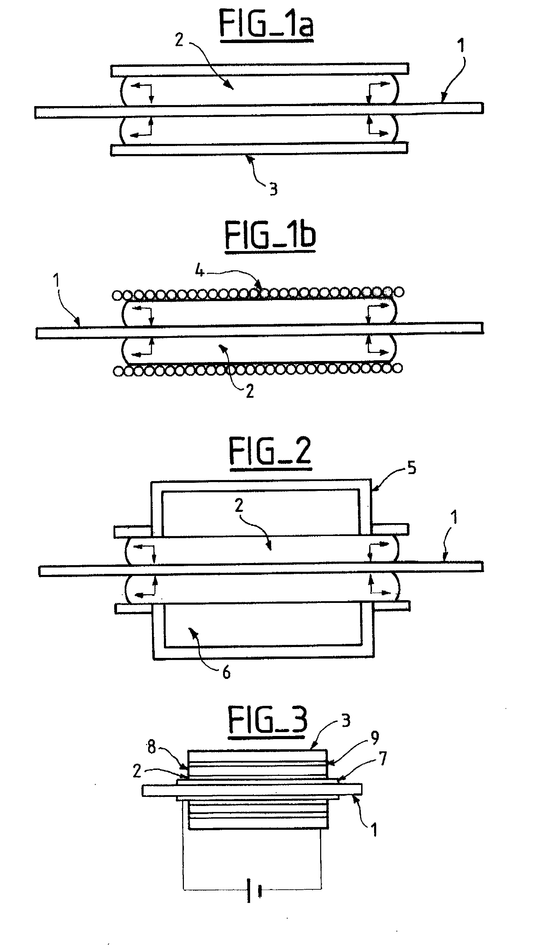

Selon un premier mode de réalisation de l'invention représenté figure 1a), un matériau 2, tel qu'un polymère par exemple, est inséré dans un tube capillaire 3 constitué d'un matériau ne se dilatant pas ou peu sous l'effet de la chaleur. Ce tube 3 peut être composé par exemple d'un alliage ferreux tel que celui de la marque "Invar" des "Aciéries d'IMPHY".

Le matériau 2 est alors chauffé à travers le tube capillaire 3 et va se dilater et augmenter de volume sous l'effet de la chaleur.

Confiné dans l'espace délimité par le tube capillaire 3, le matériau 2 va se dilater comme indiqué par les flèches, c'est-à-dire vers la fibre 1 en la comprimant dans la direction radiale c'est-à-dire en se plaquant encore plus sur celle-ci et surtout s'étendre dans la direction longitudinale de la fibre, ce qui est l'effet recherché.

La dilatation du matériau 2 et donc l'étirement thermique qui en découle, sont contrôlés par la température.

L'adhérence du matériau 2 sur la fibre 1 peut être différente de son adhérence sur le tube capillaire 3, en particulier sous l'effet de la chaleur. L'étirement du matériau 2 dans la direction longitudinale de la fibre, n'est alors pas le même au niveau de la fibre 1 et au niveau du tube 3 ; l'étirement au niveau de la fibre 1 peut notamment être freiné par une trop forte adhérence du matériau 2 sur le tube capillaire 3.

Une solution représentée figure 1b) consiste à remplacer le tube capillaire par des spires 4 toujours constituées du même alliage ferreux. Ces spires 4 forment ce qu'on appelle un guipage.

L'étirement du matériau 2 n'est alors plus freiné au niveau des spires 4 qui peuvent s'écarter légèrement l'une de l'autre sous l'effet de l'étirement, leur diamètre restant néanmoins constant.

Selon un second mode de réalisation représenté figure 2, un matériau 2, tel qu'un polymère par exemple, est encerclé par un réservoir hermétique 5 rempli d'un élément incompressible 6 directement en contact avec le matériau polymère 2. Cet élément incompressible 6 peut être un liquide incompressible tel qu'une huile ou un gel silicone ou un matériau thermiquement extensible tel qu'un polymère.

Le matériau 2 constitue en quelque sorte une paroi du réservoir 5. Les autres parois du réservoir 5 sont suffisamment rigides pour qu'une pression exercée sur le liquide ou le matériau 6 contenu dans le réservoir 5 induise uniformément sur la surface du matériau 2 en contact avec l'élément 6, des forces mécaniques radiales externes.

Le réservoir 5 peut être constitué d'un matériau tel que l'invar cité précédemment ou le "Kovar".

Le volume du matériau 2 restant constant, la pression transmise audit matériau 2 qui est confiné dans l'espace délimité par le réservoir 5, a pour effet de l'aplatir, d'une part en le plaquant encore plus sur la fibre 1 sous l'effet d'une force radiale et d'autre part de l'étirer longitudinalement c'est-à-dire dans la direction longitudinale de la fibre 1.

La pression au niveau du réservoir et donc l'étirement mécanique qui en découle, sont contrôlés par des actionneurs tels que par exemple un piston ou un dispositif électro-magnétique ou piézo-électrique ou thermique.

Pour la mise en oeuvre des deux modes de réalisation précédemment cités, on choisit de préférence un matériau 2 polymère ayant une très bonne adhérence sur la fibre. Un polymère est en effet un très bon intermédiaire pour transmettre un mouvement ou une force. Pour une fibre en silice, on peut choisir un polymère de type silicone.

Le matériau polymère est de préférence un élastomère réticulé car un tel élastomère présente la particularité de se déformer sous l'effet d'une contrainte et de reprendre sa forme initiale lorsque la contrainte cesse.

Selon un troisième mode de réalisation représenté figure 3, un matériau électrochimique 2 est disposé dans un tube 3 délimitant un espace confiné au sens de l'invention.

Le matériau électrochimique 2 va alors subir un cycle d'oxydo-réduction. Sous l'effet d'un potentiel électrique, ce matériau 2 va se dilater et augmenter de volume, entraînant l'élongation de la fibre de la même manière que précédemment décrit en référence au premier mode de réalisation par chauffage.

Pour mettre en oeuvre de ce troisième mode de réalisation, le matériau électrochimique 2 est choisi dans le groupe comprenant les polymères conducteurs, les composés d'insertion inorganiques, les composés graphites d'intercalation, les composés de type Fullerène.

Les propriétés des polymères conducteurs sont décrites dans la publication « Muscles artificiels à base de nouveaux polymères conducteurs électroniques » de S. Sadki, C. Bohn, A.B. Brennan et J.R. Reynolds, abrégé d'une communication aux « journées polymères conducteurs » de 2001. Lorsqu'un tel polymère conducteur associé à un électrolyte est soumis à un potentiel électrique, un phénomène de dopage/dépopage induit un changement de volume dudit matériau polymère. Ces polymères sont utilisés dans le domaine biomédical pour des applications de muscles artificiels.

Les composés d'insertion inorganiques sont basés sur des compositions d'oxydes de métaux de transition et de composés ioniques tels que du sel de lithium. Lorsqu'un tel matériau associé à un électrolyte est soumis à un potentiel électrique, un phénomène de d'insertion/désinsertion induit un changement de volume dudit matériau. Ces matériaux sont couramment utilisés dans les batteries.

Les composés graphites d'intercalation ou les oxydes graphitiques, ainsi que les composés de type Fullerène sont également bien adaptés à la mise en oeuvre de ce troisième mode de réalisation. Lorsqu'un de tels matériaux sont associés à des électrolytes et soumis à un potentiel électrique, un changement de volume desdits matériaux est également observé.

Le matériau électrochimique 2 est disposé sur la fibre 1 par dessus une couche métallique, en or par exemple, constituant une première électrode 7. Ledit matériau 2 est confiné dans un tube 3 métallique dont la paroi interne est métallisé avec le même métal que la première électrode afin de constituer une deuxième électrode 9. Le tube 3 contient en outre un électrolyte adapté 8, tel qu'un matériau conducteur ionique 8, sous forme de gel par exemple.

Un potentiel électrique est alors appliqué entre les électrodes 7 et 9 et provoque l'électrolyse du matériau électrochimique 2 qui se dilate et exerce des pressions sur la fibre 1. Une boucle de régulation permet de contrôler le l'étirement de la fibre 1 due à la dilatation du matériau 2.

On va à présent donner quelques estimations.

La longueur de la portion de fibre comportant le réseau de Bragg est typiquement de quelques dizaines de millimètres ; elle peut cependant être comprise entre 50 µm et plusieurs mètres. L'accordabilité en longueur d'onde peut être utilisée pour positionner le filtre sur un canal de transmission ou sur un autre, en fonction de la longueur d'onde à transmettre ou pour positionner le filtre sur un canal ou entre deux de façon à rendre passant ou non passant le dispositif auquel il est intégré. Typiquement, l'espacement intercanal est de 100, 50 voire 25 GHz, ce qui correspond à un espacement en longueur d'onde de 0.8, 0.4 ou 0.2 nm.

Pour un diamètre de fibre en silice d'environ 125 µm, l'épaisseur du matériau polymère revêtu sur la fibre varie entre 60 µm et 5 mm.

L'étirement est limité par la résistance mécanique de la fibre. Une valeur limite acceptable est de l'ordre de 0.5% lorsque la fibre est en silice. Pour un décalage en longueur d'onde de 0.8 nm, l'étirement est environ de 0.1%. Dans le cas d'un étirement par voie thermique, on chauffe le matériau polymère à une température d'environ 80°C.

## Revendications

**1.** Filtre accordable composé d'une fibre optique (1) comportant un réseau de Bragg sur une portion de ladite fibre (1), **caractérisé en ce que** ladite portion est revêtue d'un matériau (2) maintenu dans un espace confiné, ledit matériau (2) étant apte à exercer des pressions sur ledit réseau de Bragg de manière à comprimer radialement et à étirer longitudinalement ladite portion de fibre (1).

**2.** Filtre accordable selon la revendication 1, **caractérisé en ce que** lesdites pressions sont induites par chauffage du matériau (2) qui se dilate dans ledit espace confiné.

**3.** Filtre accordable selon la revendication 2, **caracté-**

**risé en ce que** ledit espace confiné est délimité par un tube capillaire (3) peu dilatable sous l'effet de la chaleur.

4. Filtre accordable selon la revendication 2, **caractérisé en ce que** ledit espace confiné est délimité par des spires (4) peu dilatables sous l'effet de la chaleur.

5. Filtre accordable selon la revendication 1, **caractérisé en ce que** lesdites pressions sont induites par des forces mécaniques radiales externes appliquées sur la surface du matériau (2) maintenu dans ledit espace confiné.

6. Filtre accordable selon la revendication 5, **caractérisé en ce que** ledit espace confiné est délimité par un réservoir (5) entourant ladite portion de fibre et rempli d'un élément non compressible (6) apte à induire lesdites forces radiales sous l'effet d'une pression exercée sur ledit élément non compressible (6).

7. Filtre accordable selon la revendication 6, **caractérisé en ce que** ledit élément incompressible (6) est un fluide non compressible.

8. Filtre accordable selon la revendication 6, **caractérisé en ce que** ledit élément incompressible (6) est un matériau thermiquement extensible.

9. Filtre accordable selon l'une quelconque des revendications précédentes, **caractérisé en ce que** le matériau (2) exerçant les pressions sur la portion de fibre à réseau de Bragg est un polymère de type élastomère réticulé.

10. Filtre accordable selon la revendication 9, **caractérisé en ce que** l'élastomère réticulé est de type silicone.

11. Filtre accordable selon la revendication 1, **caractérisé en ce que** lesdites pressions sont induites par oxydo-réduction du matériau (2) qui se dilate dans ledit espace confiné.

12. Filtre accordable selon la revendication 11, **caractérisé en ce que** le matériau (2) est un matériau électrochimique choisi dans le groupe comprenant les polymères conducteurs, les composés d'insertion inorganiques, les composés graphites d'intercalation, les composés de type Fullerène.

13. Filtre accordable selon la revendication 11, **caractérisé en ce que** le matériau (2) est disposé entre une première électrode (7) et une deuxième électrode (9) et est associé à un électrolyte (8).

14. Filtre accordable selon la revendication 13, **caractérisé en ce que** l'électrolyte (8) est un matériau conducteur ionique de type gel.

15. Procédé d'étirement d'une fibre optique composée d'un réseau de Bragg sur une portion de ladite fibre, **caractérisé en ce qu'**il consiste à exercer des pressions sur ledit réseau au moyen d'un matériau maintenu dans un espace confiné autour de ladite portion de fibre, de manière à étirer longitudinalement ledit matériau et ainsi étirer longitudinalement ladite portion de fibre.

16. Procédé d'étirement selon la revendication 15, **caractérisé en ce que** lesdites pressions sont exercées par dilatation dudit matériau.

17. Procédé d'étirement selon la revendication 16, **caractérisé en ce que** l'espace confiné est délimité par un tube capillaire peu dilatable sous l'effet de la chaleur et **en ce que** la dilatation dudit matériau polymère est induite par le chauffage dudit tube capillaire.

18. Procédé d'étirement selon la revendication 16, **caractérisé en ce que** l'espace confiné est délimité par un guipage peu dilatable sous l'effet de la chaleur et **en ce que** la dilatation dudit matériau polymère est induite par le chauffage dudit guipage.

19. Procédé d'étirement selon la revendication 16, **caractérisé en ce que** l'espace confiné est délimité par un tube métallique et **en ce que** la dilatation dudit matériau est induite par un cycle d'oxydo-réduction, un potentiel électrique étant appliqué entre deux électrodes entourant ledit matériau.

20. Procédé d'étirement selon la revendication 15, **caractérisé en ce que** lesdites pressions sont exercées par des forces mécaniques radiales appliquées sur la surface dudit matériau.

21. Procédé d'étirement selon la revendication 20, **caractérisé en ce que** l'espace confiné est délimité par un réservoir rempli d'un élément non compressible et **en ce qu'**il consiste à exercer une pression sur ledit élément non compressible de manière à induire lesdites forces mécaniques radiales sur la surface dudit matériau.

## FIG_1a

## FIG_1b

## FIG_2

## FIG_3